# EUROPEAN PATENT SPECIFICATION

(11) **EP 1 225 350 B1**
(45) Date of publication and mention of the grant of the patent: **04.10.2006**
(21) Application number: 02001287.8
(22) Date of filing: 18.01.2002
(51) Int. Cl.: F16C 11/06

(54) **Retention method of a bearing**
Verfahren zum Festhalten eines Lagers
Méthode de fixation d'un palier

(30) Priority: 19.01.2001 JP 2001011757
(43) Date of publication of application: 24.07.2002
(73) Proprietor: MINEBEA Co., Ltd., Kitasaku-gun, Nagano-ken (JP)
(72) Inventor: Sasaki, Gen, Minebea Co., Ltd., Karuizawa, Kitasaku-gun, Nagano-ken (JP); Akao, Shinichi, Minebea Co., Ltd., Karuizawa, Kitasaku-gun, Nagano-ken (JP); Takanishi, Shouji, Minebea Co., Ltd., Karuizawa, Kitasaku-gun, Nagano-ken (JP)
(74) Representative: Schaad, Balass, Menzl & Partner AG

(56) References cited:
- EP-A- 0 632 207
- DE-A- 19 935 469
- DE-U- 29 809 031
- US-A- 4 337 559
- PATENT ABSTRACTS OF JAPAN vol. 2000, no. 09, 13 October 2000 (2000-10-13) & JP 2000 179537 A (SOMIC ISHIKAWA:KK), 27 June 2000 (2000-06-27)

## Description

### BACKGROUND OF THE INVENTION

### 1. Field of the Invention

The present invention relates to a retention method of a bearing, and more particularly to a method for retaining an outer race to a housing in which the bearing is to be inserted.

### 2. Description of the Related Art

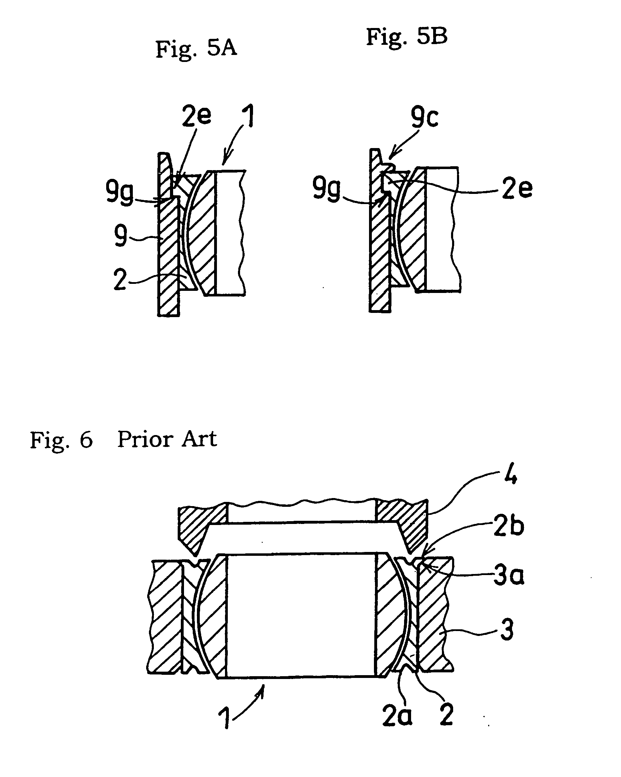

Fig. 6 shows a cross section in which an outer race 2 of a spherical bearing 1 is retained to a housing 3 by means of a retention method called staking. In the staking method, the spherical bearing 1 is inserted in a hole of the housing 3, an end face 2a of the outer race 2 is bent by a staking tool 4, and a locking section 2b matching with a chamfered section 3a of the hole is formed at the outer periphery of the outer race 2.

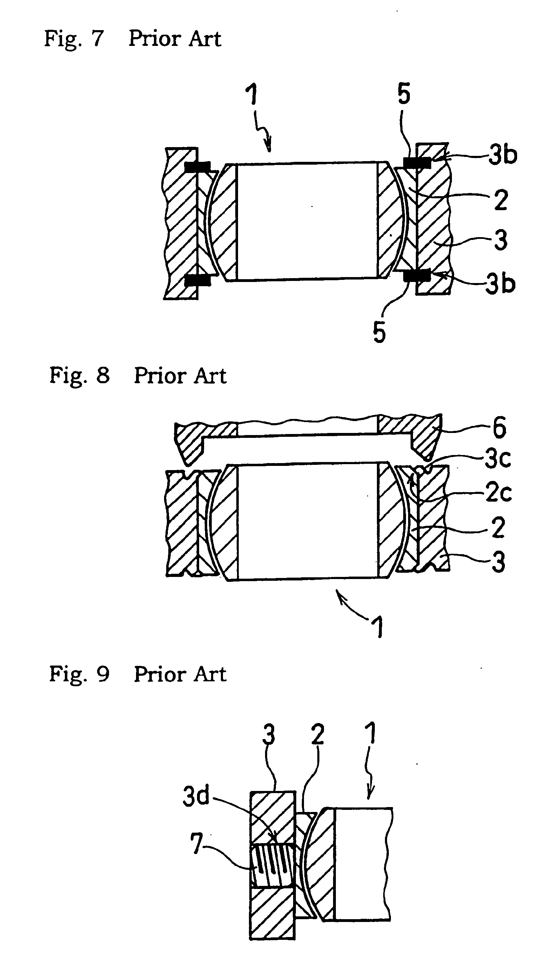

In Fig. 7, a different retention method is shown which uses snap rings 5. In this method, annular grooves 3b for inserting the snap rings 5 therein are formed adjacent to both ends of the area to which the spherical bearing 1 is retained in the hole of the housing 3. And, after one of the snap rings 5 is inserted in one of the annular grooves 3b, the spherical bearing 1 is inserted in the hole and pushed to the snap ring 5. Then, the other snap ring 5 is inserted in the other annular groove 3b so as to retain the outer race 2 with the two snap rings 5.

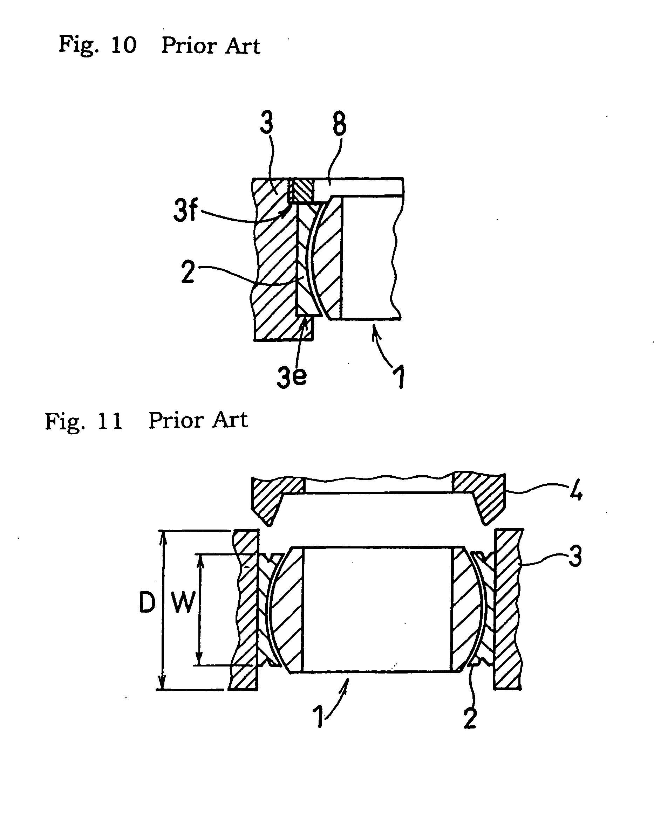

There are other retention methods, such as the method shown in Fig. 8 in which a chamfered section 2c is formed at the outer race 2 of the spherical bearing 1 and the housing 3 is bent by a staking tool 6 having a diameter larger than that of the staking tool 4 in Fig. 6 so as to form a locking section 3c matching with the chamfered section 2c at the inner periphery of the hole. Or, Fig. 9 shows the further another method in which a tapped hole 3d is formed in the housing 3, and a screw 7 is engaged therewith retaining the outer race 2. Moreover, in Fig. 10, a flange-like step 3e and a counter boring 3f with a thread groove are provided in the hole, and the spherical bearing 1 is inserted in the hole and pushed to the step 3e, then, a nut 8 is engaged with the counter boring 3f so as to press another end of the spherical bearing 1 for retention .

In the above conventional retention methods, however, the following shortcomings exist. First, in Fig. 6 in which the end face 2a of the outer race 2 is bent by the staking tool 4 and the locking section 2b engaged with the chamfered section 3a is formed at the outer periphery of the outer race 2, when the depth D of the hole of the housing 3 exceeds the width W of the outer race 2 as shown in Fig. 11, the staking tool 4 interferes with the housing 3, whereby a desired staking is not achieved.

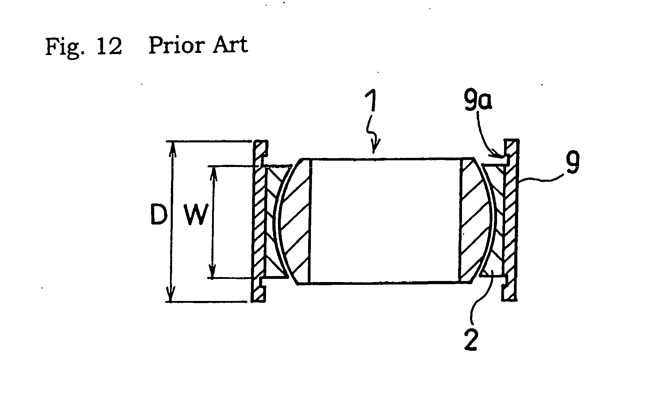

In the method using the snap rings 5 as shown in Fig. 7, if the depth D of the hole exceeds the width W of the outer race 2, and if a housing 9 is thin as shown in Fig. 12, a sufficient groove depth for an annular groove 9a is not formed resulting in that the snap ring 5 may not be firmly retained.

Further, in the method shown in Fig. 8 in which the housing 3 is bent forming the locking section 3c engaged with the chamfered section 2c at the inner periphery of the hole, when the housing 3 is thin, as shown in Fig. 12, a sufficient thickness cannot be secured for forming the locking section 3c; and in the method using the screw 7 and the nut 8, as shown in Figs. 9 and 10, when the housing 3 is thin, sufficient threading cannot be achieved, thus, the screw 7 and the nut 8 are likely to loosen.

### SUMMARY OF THE INVENTION

The present invention is made in light of the above problems, and it is an object of the present invention to firmly retain an outer race of a bearing to a housing by means of a staking method even under the conditions in which retention of the bearing is difficult as in the related art, namely, when the hole is deeper than the width of the outer race, or when the housing is thin. This object is attained by the method according to claim 1.

In a bearing retention method according to the present invention, there is provided a bearing retention method in which a bearing is retained in a hole formed in a housing, wherein the bearing is inserted in the hole, the material of the wall of the hole is pushed into the inner part of the hole by means of a staking tool with a diameter larger than that of the hole, and the material is pressed to contact with an end face of the outer race with the staking tool, thereby forming a locking section for retaining the outer race.

In the present invention, even if the wall of the housing, where the hole is formed, is thin, an amount of material necessary for forming the locking section can be obtained by taking a small amount from the entire area of the wall of the hole in such a manner as to push the material of the hole toward the center of the hole. The necessary amount of material as a whole is thus secured, and the material is pressed to contact with the end face of the outer race to form the locking section achieving a sufficient strength.

In the bearing retention method according to the present invention, preferably, there is provided a step in advance for retaining the outer race at an end of the area to which the bearing is to be retained in the hole, and after an end of the outer race is brought into contact with the step, the locking section is formed at a position corresponding to another end of the outer race.

In the present invention, preferably, the position of the one end of the outer race of the bearing is determined by the step formed in advance in the hole and the other end of the outer race is retained by the locking section formed by the method according to the present invention.

In the bearing retention method according to the present invention, preferably, a projection which can be press fitted in the hole is formed in advance, a concave section corresponding to the projection is formed in advance in the hole, and after the projection of the outer race is engaged with the concave section of the hole, the locking section is formed at a position corresponding to the other end of the outer race.

In the present invention, preferably, when the bearing is inserted in the hole, the projection formed in advance at the other end of the outer race is engaged with the concave section, which is formed in advance in the hole, whereby positioning of the outer race relative to the hole is performed in advance. After that, the other end of the outer race is retained by the locking section formed by the method according to the present invention.

In the bearing retention method according to the present invention, preferably, the projections in which the outer race may be press fitted, are formed adjacent to both ends of the area to which the bearing is to be retained in the hole, and after the outer race is press fitted, the locking sections are formed.

In the present invention, preferably, when the bearing is inserted in the hole, the outer race is positioned in advance with respect to the hole by the projections formed in advance adjacent to both ends of the area to which the bearing is to be retained in the hole. After that, the both ends of the outer race are retained by the locking sections formed by the method of the present invention.

In addition, in the bearing retention method according to the present invention, preferably, the projection is formed in advance at the end of the outer race, the concave section matching to the convex section is formed in advance in the hole, and after the projection of the outer race is engaged with the concave section of the hole, the locking section is formed at a position corresponding to the end of the outer race.

In the present invention, preferably, when the bearing is inserted in the hole, the projection formed in advance at the end of the outer race is engaged with the concave section , which is formed in advance at the hole matching the projection formed on the outer race, thus, the outer race is positioned in advance with respect to the hole and the bearing is retained in a direction to engage the bearing with the hole. After that, the end of the outer race is retained in the direction in which the bearing is disengaged from the hole by the locking section formed by the method of the present invention.

### BRIEF DESCRIPTION OF THE DRAWINGS

Fig. 1 is a cross sectional view showing a state in which an outer race of a spherical bearing is retained to a thin housing by a bearing retention method according to a first embodiment of the present invention, wherein the part below line A - A shows a state before staking and the part above line A - A shows a state after staking;
Fig. 2 is a cross sectional view showing a state in which the outer race of the spherical bearing is retained to the thin housing by a bearing retention method according to a second embodiment of the present invention;
Figs. 3A and 3B are cross sectional views showing states in which the outer race of the spherical bearing is retained to the thin housing by a bearing retention method according to a third embodiment of the present invention, wherein Fig. 3A partially shows a state before staking and Fig. 3B partially shows a state after staking;
Figs. 4A and 4B are cross sectional views showing states in which the outer race of the spherical bearing is retained to the thin housing by a bearing retention method according to a fourth embodiment of the present invention, wherein Fig. 4A partially shows a state before staking and Fig. 4B partially shows a state after staking;
Figs. 5A and 5B are cross sectional views showing states in which the outer race of the spherical bearing is retained to the thin housing by a bearing retention method according to a fifth embodiment of the present invention, wherein Fig. 5A partially shows a state before staking and Fig. 5B partially shows a state after staking;
Fig. 6 is a cross sectional view showing a state in which the outer race of the spherical bearing is retained to a housing by staking, according to the conventional art;
Fig. 7 is a cross sectional view showing a state in which the outer race of the bearing is retained to the housing by a retention method using a snap ring, according to the conventional art;
Fig. 8 is a cross sectional view showing a state in which the outer race of the spherical bearing is retained to the housing by staking, according to the conventional art;
Fig. 9 is a cross sectional view showing a state in which the outer race is retained to the housing in such a manner that a tapped hole is formed in the housing, into which a screw is fitted, according to the conventional art;
Fig. 10 is a cross sectional view showing a state in which the outer race of the spherical bearing is retained to the housing using a flange-shaped step and a nut, according to the conventional art;
Fig. 11 is a cross sectional view for explaining a problem in the conventional art in Fig. 6; and
Fig. 12 is a cross sectional view for explaining a problem in the conventional art in Fig. 7.

### DESCRIPTION OF THE PREFERRED EMBODIMENTS

Embodiments of the present invention will be described hereinbelow with reference to the accompanying drawings. Here, parts identical or corresponding to those of the related art are given the same reference numerals throughout, and a detailed description will be omitted.

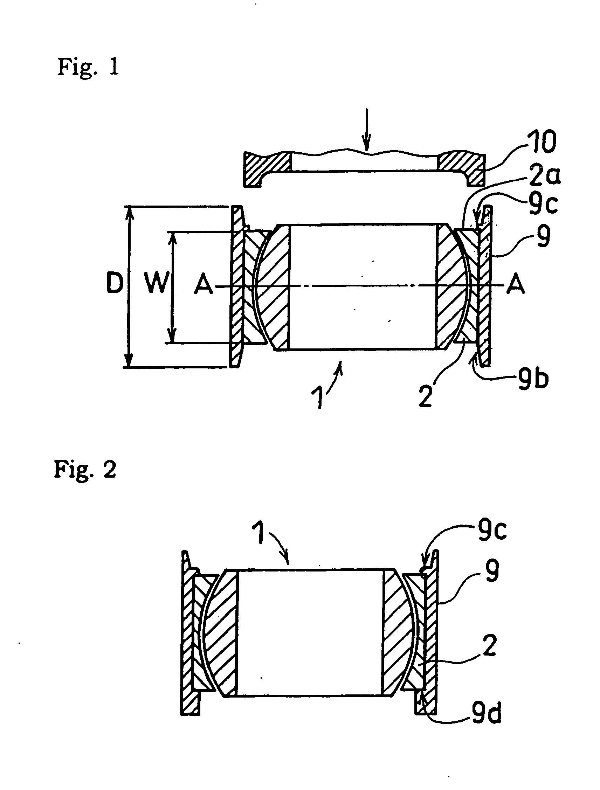

Fig. 1 is a cross sectional view showing a state in which an outer race 2 of a spherical bearing 1 is retained to a thin housing 9, by a bearing retention method according to a first embodiment of the present invention. In the drawing, the part below line A - A shows a state before staking and the part above line A - A shows a state after staking.

First, the spherical bearing 1 is inserted in a hole of the thin housing 9. In this instance, the spherical bearing 1 can be inserted in the hole smoothly by forming a tapered surface 9b near an opening of the hole of the thin housing 9. Next, staking is performed to the material of the hole using a staking tool 10 with a diameter larger than that of the hole. The tapered surface 9b in the vicinity of the opening of the hole can also make the contact of the staking tool 10 during staking more smooth. The material of the hole is pushed toward the center of the hole with the staking tool 10 and is thus pressed to contact with an end face 2a of the outer race 2 thereby forming a locking section 9c. In practice, the staking tools 10 are simultaneously squeezed from both the upper and lower sides of the hole of the thin housing 9 forming the locking sections 9c at the upper and lower sides at the same time.

According to the present invention, the material of the hole is squeezed using the staking tool 10 with a diameter larger than that of the hole so that an amount of material necessary for forming the locking section 9c for retaining the outer race 2 to the hole is formed only using a small part of the entire area of the wall of the hole. The necessary amount of the material can be secured as a whole while the squeezed material is pressed to contact with the end face 2a of the outer-race 2 using the staking tool 10 so as to form the locking section 9c obtaining a sufficient strength. Also, since the material is formed from only a small part of the entire area of the wall of the hole, there can be found no decrease in strength and deformation as to the thin housing.

According to the first embodiment of the present invention, the depth D of the hole is exceeds the width W of the outer race 2, and also the spherical bearing 1 can be retained to the thin housing 9 by staking so that the spherical bearing 1 can be firmly retained to the thin housing 9 at low cost.

A second embodiment of the present invention will be described with reference to Fig. 2. Here, parts identical or corresponding to those in the first embodiment of the present invention are denoted by the same numerals and a detailed description will be omitted.

In the second embodiment of the present invention, a step 9d for retaining the outer race 2 is provided in advance at an end of the area to which the spherical bearing 1 is to be retained in the hole of the thin housing 9. The spherical bearing 1 is then inserted in the hole of the thin housing 9 at one end (a lower end) of the outer race 2 supporting by the step 9d. After that, the locking section 9c is formed at another end (upper end) of the outer race 2 by a method similar to that of the first embodiment of the present invention.

According to the second embodiment of the present invention, when retaining the spherical bearing 1 in the hole of the thin housing 9, the position of the one end of the outer race 2 of the spherical bearing 1 can be accurately determined by the step 9d previously formed in the hole, thereby improving the positional accuracy when the coupling is complete. Also, by retaining the other end of the outer race 2 with the locking section 9c, the spherical bearing 1 is retained to the thin housing 9 by staking, thus, the spherical bearing 1 can be firmly secured at low cost.

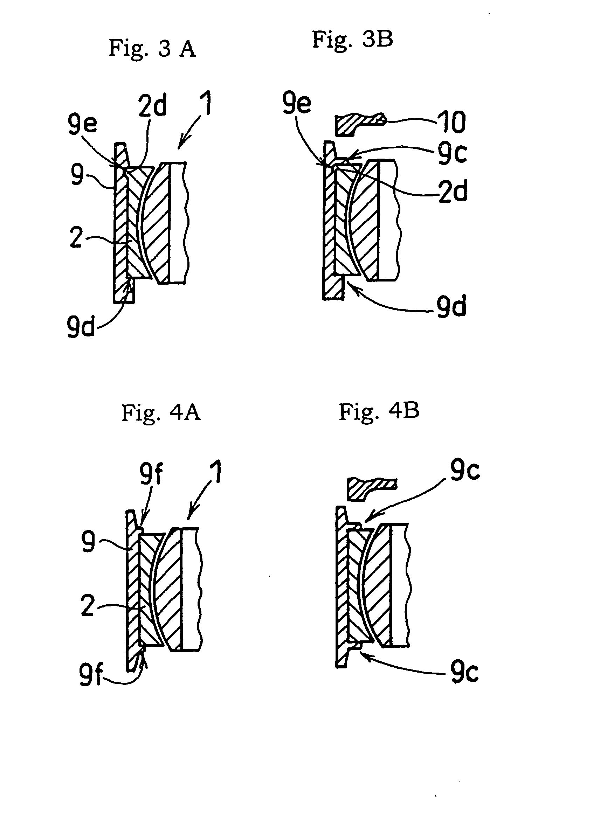

Subsequently, a third embodiment of the present invention will be described with reference to Figs. 3A and 3B. Both Fig. 3A and Fig. 3B are partial diagrammatic views showing a state of pre-staking and post-staking respectively. Parts identical or corresponding to those in the first and second embodiments of the present invention are denoted by the same numerals and a detailed description will be omitted.

In the third embodiment of the present invention, similarly to the embodiment in Fig. 2, the step 9d where the outer race 2 is retained is provided in advance at the end of the area to which the spherical bearing 1 is retained. Furthermore, a projection 2d at a size permitting squeezing into the hole is formed in advance to the other end of the outer race 2, in the while a concave section 9e matching the projection 2d is formed in advance in the hole. After the projection 2d of the outer race 2 is engaged with the concave section 9e of the hole, the locking section 9c is formed by the method similar to that of the first embodiment of the present invention, as shown in Fig. 3B.

In addition, the projection 2d of the outer race 2 and the concave section 9e of the hole may be connected with each other like a ring, or alternatively may separately be formed at one position or a plurality of positions. When the projection 2d of the outer race 2 and the concave section 9e of the hole are separately formed at the one position or the plurality of positions, they work for preventing the outer race 2 and the thin housing 9 from being rotated. Also, when the projection 2d of the outer race 2 and the concave section 9e of the hole are connected to form a ring, the projection 2d of the outer race 2 can easily be engaged with the concave section 9e of the hole without considering the phase of the outer race 2 relative to the thin housing 9.

According to the third embodiment of the present invention, when the spherical bearing 1 is inserted in the hole, the projection 2d formed at the other end of the outer race is engaged with the concave section 9e formed at the hole, thereby enabling the outer race 2 to be positioned in advance with respect to the thin housing 9. Accordingly, a specified positioning accuracy can be obtained before staking so that the positioning accuracy upon completion of retention can be further improved. Also, by retaining the other end of the outer race 2 with the locking section 9c, the spherical bearing 1 can be retained to the thin housing 9 by staking, thereby enabling the spherical bearing 1 to be firmly secured at low cost.

Next, a fourth embodiment of the present invention will be described with reference to Figs. 4A and 4B. Both Fig. 4A and Fig. 4B are partial diagrammatic views showing a state of pre-staking and post-staking respectively. Parts identical or corresponding to those in the first to third embodiments of the present invention are denoted by the same numerals and a detailed description will be omitted.

In the fourth embodiment of the present invention, projections 9f in a size permitting the outer race 2 be press fitted into the housing are formed in advance adjacent to both sides of the area to which the spherical bearing 1 is retained in the hole of the thin housing 9. The projections 9f may be connected to form a ring, or alternatively, may be separately formed at one position or at a plurality of positions. The spherical bearing 1 is then inserted in the hole of the thin housing 9. After the outer race 2 is press fitted in the hole, the locking sections 9c are formed by a method similar to that of the first embodiment of the present invention, thereby retaining both ends of the outer race 2 with the locking sections 9c. In addition, the locking sections 9c formed in this instance are formed by collecting both the material obtained from the wall of the hole and the projection 9f.

According to the fourth embodiment of the present invention, when the spherical bearing 1 is inserted in the hole, the outer race 2 can be positioned in advance with respect to the hole by the projections 9f formed in a manner adjacent to both ends of the area to which the spherical bearing 1 is coupled in the hole. Accordingly, a specified positioning accuracy can be obtained before staking, thereby improving the accuracy when the retaining is completed. Also, since the locking sections 9c are formed at both ends of the outer race 2, the spherical bearing 1 can be retained to the thin housing 9 by staking, whereby the spherical bearing 1 can be firmly retained at low cost.

Subsequently, a fifth embodiment of the present invention will be described with reference to Figs. 5A and 5B. Fig. 5A and Fig. 5B are partial diagrammatic views showing a state of pre-staking and pro- staking respectively. Parts identical or corresponding to those in the first to fourth embodiments of the present invention are denoted by the same numerals and a detailed description will be omitted.

In the fifth embodiment of the present invention, a projection 2e is formed at an end (upper end) of the outer race 2 of the spherical bearing 1, and a concave section 9g matching the projection 2e is formed in the hole in advance. While the projections 9f may be connected with each other to form a ring, or alternatively, may be separately formed at one position or at a plurality of positions, in any case, the projections 9f have a sufficient strength for supporting the load applied to the spherical bearing 1. When the spherical bearing 1 is inserted in the hole of the thin housing 9, the projection 2e of the outer race 2 is engaged with the concave section 9g of the hole, and the locking section 9c is then formed at a position matching the end (upper end) of the outer race 2 by the method similar to that of the first embodiment of the present invention.

According to the fifth embodiment of the present invention, when the spherical bearing 1 is inserted in the hole, the projection 2e formed at the end of the outer race 2 is engaged with the concave section 9g formed at the hole, so that the outer race 2 can preliminarily be positioned with respect to the hole and the spherical bearing 1 can be retained in the direction inserting the bearing in the hole(downward). Accordingly, the positioning accuracy can be improved when the retaining is completed. Also, since the end of the outer race 2 is retained with the locking section 9c, the spherical bearing 1 can be retained to the thin housing 9 by staking, and consequently, the spherical bearing 1 can be firmly retained at low cost.

As described above, according to the first to fifth embodiments of the present invention, the bearing can be reliably retained by staking even under conditions difficult in the related arts such that the depth D of the hole exceeds the width W of the outer race 2, or the spherical bearing 1 is retained to the thin housing 9. In addition, although the present invention examples the spherical bearing 1 retained to the thin housing 9, the invention is not limited thereto and may be applied to any other bearings with an outer race.

Since the present invention is thus constructed, the outer race of the bearing can be reliably retained to the housing by staking irrespective of the relation between the depth of the hole and the width of the outer race or the thickness of the housing. Consequently, the bearing can be firmly retained to the housing at low cost.

## Claims

1. A method of retaining a bearing (1) having an outer race (2) in a hole formed in a housing (9), comprising the following steps;
inserting the bearing (1) in the hole;
pushing material of the wall of the hole toward the center of the hole using a staking tool with a diameter larger than that of the hole;
pressing the material so as to contact with an end face of the outer race using the staking tool; and
forming a locking section (9c) for retaining the outer race (2);
**characterized by** the following steps:
forming in advance a projection (2d) at an end of the outer race (2);
forming in advance a concave section (9e) matching the projection (2d), said concave section (9e) being at an end of the area within the hole to which the bearing (1) is retained;
engaging the projection (2d) of the outer race (2) with the concave section (9e) of the hole;
forming the locking section (9c) at said end of the outer race (2).

2. Bearing retention method according to claim 1, wherein said projection (2d) is formed at a size that permits squeezing of the outer race (2) into the hole.

3. Bearing retention method according to claim 1 or 2, comprising the steps of forming in advance a step (9d) for retaining the outer race (2), said step (9d) being at another end of the area within the hole to which the bearing (1) is retained, and bringing another end of the outer race (2) into contact with the step (9d).

4. Bearing retention method according to one of claims 1-3, wherein the housing comprises a tapered surface (9b) near the opening of the hole facilitating insertion of the bearing (1) and making the contact with the staking tool smoother.

5. Bearing retention method according to one of claims 1-4, wherein the depth (D) of the hole exceeds the width (W) of the bearing.

## Patentansprüche

1. Verfahren zum Halten eines Lagers (1) mit einem äusseren Laufring (2) in einem Loch, welches in ein Gehäuse (9) geformt ist, umfassend die folgenden Schritte:
einführen des Lagers (1) in das Loch;
drücken von Material der Wand des Loches in Richtung des Zentrums des Loches unter verwenden eines Verkörnungswerkzeuges mit einem Durchmesser, welcher grösser als derjenige des Loches ist;
pressen des Materials unter Verwendung des Verkörnungswerkzeuges derart, dass eine Stirnfläche des äusseren Laufrings berührt wird;
bilden eines Verriegelungsabschnitts (9c) zum Halten des äusseren Laufrings (2);
**gekennzeichnet durch** die folgenden Schritte:
vorgängiges bilden eines Vorsprungs (2d) bei einem Ende des äusseren Laufrings (2);
vorgängiges bilden eines konkaven Abschnitts (9e) entsprechend dem Vorsprung (2d), wobei sich besagter konkaver Abschnitt (9e) bei einem Ende des Bereichs innerhalb des Lochs befindet, an welchem das Lager (1) gehalten ist;
in Eingriff bringen des Vorsprungs (2d) des äusseren Laufrings (2) mit dem konkaven Abschnitt (9e) des Loches;
bilden des Verriegelungsabschnitts (9c) an besagtem Ende des äusseren Laufrings (2).

2. Lagerhalterungsverfahren nach Anspruch 1, wobei besagter Vorsprung (2d) in einer Grösse gebildet ist, welche ein Hineindrücken des äusseren Laufrings (2) in das Loch erlaubt.

3. Lagerhalterungsverfahren nach Anspruch 1 oder 2, umfassend die Schritte des vorgängigen Bildens eines Absatzes (9d) zum Halten des äusseren Laufrings (2), wobei besagter Absatz (9d) sich an einem anderen Ende des Bereichs innerhalb des Lochs befindet, an welchem das Lager (1) gehalten ist, und in Kontakt bringen eines anderen Endes des äusseren Laufrings (2) mit dem Absatz (9d).

4. Lagerhalterungsverfahren nach einem der Ansprüche 1 bis 3, wobei das Gehäuse eine verjüngte Oberfläche nahe der Öffnung des Loches umfasst, welche ein Einführen des Lagers (1) erleichtert und den Kontakt mit dem Verkörnungswerkzeug sanfter macht.

5. Lagerhalterungsverfahren nach einem der Ansprüche 1 bis 3, wobei die Tiefe (D) des Loches die Weite (W) des Lagers übersteigt.

## Revendications

1. Méthode de fixation d'un palier (1) comportant une bague extérieure (2) dans un trou formé dans un logement (9), comprenant les étapes suivantes consistant à :
insérer le palier (1) dans le trou ;
pousser le matériau de la paroi du trou vers le centre du trou en utilisant un outil d'agrafage dont le diamètre est supérieur à celui du trou ;
comprimer le matériau de telle sorte qu'il vienne en contact avec une face d'extrémité de la bague extérieure en utilisant l'outil d'agrafage ; et
former une section de verrouillage (9c) destinée à retenir la bague extérieure (2) ;
**caractérisée par** les étapes suivantes consistant à :
former à l'avance une saillie (2d) à une extrémité de la bague extérieure (2) ;
former à l'avance une section concave (9e) qui correspond à la saillie (2d), ladite section concave (9e) se situant à une extrémité de la zone dans le trou auquel le palier (1) est fixé ;
mettre en prise la saillie (2d) de la bague extérieure (2) avec la section concave (9e) du trou ;
former la section de verrouillage (9c) à ladite extrémité de la bague extérieure (2).

2. Méthode de fixation de palier selon la revendication 1, dans laquelle ladite saillie (2d) est formée en adoptant des dimensions qui lui permettent de comprimer la bague extérieure (2) dans le trou.

3. Méthode de fixation de palier selon la revendication 1 ou 2, comprenant les étapes consistant à former à l'avance un gradin (9d) destiné à retenir la bague extérieure (2), ledit gradin (9b) se situant à l'autre extrémité de la zone dans le trou auquel le palier (1) est fixé, et à mettre en contact l'autre extrémité de la bague extérieure (2) avec le gradin (9d).

4. Méthode de fixation de palier selon l'une quelconque des revendications 1 à 3, dans laquelle le logement comprend une surface conique (9b) à proximité de l'ouverture du trou qui facilite l'insertion du palier (1) et qui rend le contact avec l'outil d'agrafage plus régulier.

5. Méthode de fixation de palier selon l'une quelconque des revendications 1 à 4, dans laquelle la profondeur (D) du trou dépasse la largeur (W) du palier.
